# EUROPÄISCHE PATENTSCHRIFT

(11) **EP 2 646 785 B1**
(45) Veröffentlichungstag und Bekanntmachung des Hinweises auf die Patenterteilung: **08.03.2017**
(21) Anmeldenummer: 11772895.6
(22) Anmeldetag: 18.10.2011
(51) Int. Cl.: G01K 1/14, H01M 10/48, H01M 6/42

(54) **VORRICHTUNG ZUM ERFASSEN DER TEMPERATUR EINES ENERGIESPEICHERS**
APPARATUS FOR DETECTING THE TEMPERATURE OF AN ENERGY STORAGE MEANS
DISPOSITIF PERMETTANT DE DÉTECTER LA TEMPÉRATURE D'UN ACCUMULATEUR D'ÉNERGIE

(30) Priorität: 30.11.2010 DE 102010062207
(43) Veröffentlichungstag der Anmeldung: 09.10.2013
(73) Patentinhaber: Bayerische Motoren Werke Aktiengesellschaft, 80809 München (DE)
(72) Erfinder: HÖFLER, Thomas, 82194 Gröbenzell (DE); FLECKENSTEIN, Matthias, 84424 Isen (DE); HAUCK, Axelle, 85579 Neubiberg (DE); IDIKURT, Tuncay, 81541 München (DE)
(86) Internationale Anmeldenummer: PCT/EP2011/005214
(87) Internationale Veröffentlichungsnummer: WO 2012/072163

(56) Entgegenhaltungen:
- DE-A1-102007 031 857
- DE-U1-202009 015 040
- JP-A- 11 162 527
- JP-A- 2002 246 074

## Beschreibung

Die Erfindung betrifft einen elektrochemischen Energiespeicher mit einer Vorrichtung zum Erfassen der Temperatur des Energiespeichers, wobei die Vorrichtung eine Temperatursensoreinheit aufweist.

Die Leistungsfähigkeit eines elektro-chemischen Energiespeichers hängt von deren Betriebstemperatur ab. Dies gilt insbesondere, aber nicht nur, für solche Energiespeicher, welche Lithium-Ionen-Speicherzellen verwenden. Ein im Umfeld von Kraftfahrzeugen eingesetzter Energiespeicher umfasst typischerweise eine Vielzahl an Speicherzellen, die seriell und/oder parallel elektrisch miteinander verschaltet sind, um eine vorgegebene Ausgangsspannung und einen vorgegebenen Ausgangsstrom bereitstellen zu können. In den zur Zeit entwickelten Speichermodulen basieren die Speicherzellen auf der eingangs erwähnten Lithium-lonen-Technologie. Diese werden idealerweise in einem Temperaturbereich zwischen +5 °C und +40 °C betrieben. Übersteigt die Betriebstemperatur der Speicherzellen die obere Temperaturgrenze, so ergibt sich eine beschleunigte Alterung, so dass häufig eine geforderte Lebensdauer nicht eingehalten werden kann. Werden die Speicherzellen hingegen unterhalb der unteren Temperaturgrenze betrieben, so reduziert sich die Leistungsfähigkeit der Zelle stark. Zusätzlich können die Speicherzellen in diesem Temperaturbereich nur ineffizient betrieben werden. Beim Einsatz von Energiespeichern im Umfeld von Kraftfahrzeugen werden diese deshalb temperiert.

Um die Temperierung der Speicherzellen möglichst exakt und effizient vornehmen zu können, ist eine möglichst präzise Erfassung der Ist-Temperatur der Speicherzellen erforderlich. Basierend auf der erfassten Ist-Temperatur der Speicherzellen erfolgt die Temperaturregelung zum Kühlen oder Heizen der Speicherzellen. Die Regelung erfolgt mittels eines Zweipunktreglers. Beim Kühlen der Speicherzellen wird eine Kühlvorrichtung durch den Zweipunktregler beim Überschreiten eines festgelegten oberen Grenzwerts der gemessenen Temperatur eingeschaltet und beim Unterschreiten eines unteren Grenzwerts wieder ausgeschaltet. Beim Heizen wird beim Unterschreiten eines weiteren festgelegten unteren Grenzwerts eine Heizvorrichtung ein- und bei Überschreiten dieses Grenzwerts ausgeschaltet.

Je präziser die gemessenen Ist-Temperaturen der Speicherzellen den tatsächlichen Temperaturen der Speicherzellen in deren Inneren entsprechen, desto präziser können die Grenzwerte der Regelung festgelegt werden. Infolgedessen kann auch die Regelung optimiert erfolgen. Je größer hingegen die Abweichung zwischen der tatsächlichen Ist-Temperatur der Speicherzellen in deren Inneren und der gemessenen Ist-Temperatur ist, desto größere Totzeiten für die Regelung müssen berücksichtigt werden. Hierdurch sinkt die Regelgenauigkeit und zusätzlich kann ein häufiges Ein- und Ausschalten der Kühl- bzw. Heizvorrichtung die Folge sein. Daraus resultieren zum einen starke Schwankungen der Temperaturen im Inneren der Speicherzellen, was sich limitierend auf deren Lebensdauer auswirken kann. Andererseits muss zum Kühlen und Heizen zusätzlich Energie aufgebracht werden, die umso höher ist, je ungenauer die Regelung erfolgt.

Aus der US 4,572,878 ist es bekannt, einen Temperatursensor an der Unterseite eines Anschlusselements eines Kabels zur Kontaktierung des Energiespeichers anzuordnen. Ist das Kabel an einem zugeordneten Anschlussterminal des Energiespeichers elektrisch und mechanisch befestigt, so erfasst der Temperatursensor die Temperatur an der Außenseite eines Gehäuses des Energiespeichers. Ein Nachteil dieser Vorgehensweise besteht darin, dass damit nicht präzise die Temperatur im Inneren des Energiespeichers erfasst wird.

Aus der US 2010/0073005 A1 ist es weiterhin bekannt, einen Temperatursensor auf einer Leiterplatte anzuordnen. Die Leiterplatte ist dabei benachbart zu den Anschlussterminals der Speicherzellen des Energiespeichers angeordnet. Die Leiterplatte umfasst neben dem Temperatursensor weitere elektronische Komponenten zur Überwachung und Steuerung des Energiespeichers. Obwohl der Temperatursensor über ein thermisch leitfähiges Material mit dem Gehäuse einer der Speicherzellen thermisch gekoppelt ist, erfolgt aufgrund der thermischen Widerstände durch geringe Querschnittsflächen der Verbindung keine reale Erfassung der Innentemperatur der Speicherzellen.

Aus der DE 20 2009 015 040 U1 ist eine elektrochemische Batteriezelle bekannt, die mit einem Modul versehen ist, in dem ein Temperatursensor integriert ist. Der Temperatursensor steht weder mit einem Anschlussterminal noch mit Stromschienen, über die die zu einem Modul zusammengefassten Batteriezellen untereinander verbunden sind, in thermischen Kontakt, weswegen die Temperatur im Inneren der Batteriezelle nicht präzise erfasst werden kann.

Aus der DE 10 2007 031 857 A1 sind elektrochemische Energiespeicher bekannt, bei denen ein Temperatursensor auf einem Anschlussterminal einer Speicherzelle angeordnet ist. Gemäß einer ersten Anordnungsvariante ist der Temperatursensor direkt auf einem Zellverbinder angeordnet, der wiederum direkt mit dem elektrischen Pol der Speicherzelle (Anschlussterminal) verbunden ist. Gemäß einer zweiten Anordnungsvariante ist der Temperatursensor zwischen einem elektrischen Pol der Speicherzelle und einem Zellverbinder angeordnet. In beiden Fällen ist eine Beeinflussung des Temperatursensors durch den fließenden Strom gegeben, was sich nachteilig auf die Erfassung der Innentemperatur der Speicherzelle auswirkt. Gemäß einer dritten Anordnungsvariante steht der Temperatursensor über eine ihn vollständig umgebende elektrische Isolierung mit einem Zellverbinder in Kontakt. Gemäß einer vierten Anordnungsvariante steht der Temperatursensor über eine elektrische Isolierung mit einem elektrischen Pol der Speicherzelle in Kontakt. Dadurch dass in beiden Fällen der Temperatursensor nicht direkt mit dem Zellverbinder bzw. dem elektrischen Pol in Kontakt ist, kann die Temperatur im Inneren des Energiespeichers nicht präzise erfasst werden.

Aus der JP 2002 246074 A ist ein aus einzelnen Batteriezellen aufgebauter Batteriepack bekannt. Die Batteriezellen sind untereinander mittels Zellverbinder verbunden. Zur Erfassung der Temperatur einer Batteriezelle ist auf einem der Zellverbinder ein Temperatursensor angebracht. Bei dieser Anordnung des Temperatursensors ist eine Beeinflussung des Temperatursensors durch den durch den Zellverbinder fließenden Strom gegeben, was sich nachteilig auf die Erfassung der Innentemperatur der Speicherzelle auswirkt.

Aus der JP 11 162527 A ist eine wiederaufladbare Batterie bekannt, bei der ein Temperatursensor auf dem negativen oder positiven Anschlussterminal der Batterie angeordnet ist. Der zum Einsatz kommende Temperatursensor ist auf einem Filmstreifen aufgebracht, der zugleich auch Drucksensoren trägt. Mit Blick auf die Montage ist dieser Ansatz noch nicht optimal.

Es ist daher Aufgabe der vorliegenden Erfindung, einen einfach herzustellenden elektrochemischen Energiespeicher anzugeben, bei dem die Erfassung der Temperatur des elektrochemischen Energiespeichers mittels eines Temperatursensors auf äußerst präzise Weise erfolgen kann.

Diese Aufgabe wird gelöst durch einen elektrochemischen Energiespeicher gemäß den Merkmalen des Patentanspruches 1 und alternativ durch einen elektrochemischen Energiespeicher gemäß den Merkmalen des Patentanspruchs 3. Vorteilhafte Ausgestaltungen ergeben sich aus den abhängigen Patentansprüchen.

Die Erfindung schafft einen elektrochemischen Energiespeicher mit einer Vorrichtung zum Erfassen der Temperatur des elektrochemischen Energiespeichers, insbesondere für den Einsatz in einem Kraftfahrzeug. Die Vorrichtung zum Erfassen der Temperatur des Energiespeichers weist eine Temperatursensoreinheit auf. Der Energiespeicher wiederum weist eine oder mehrere Speicherzellen mit jeweils zwei Anschlussterminals zu deren elektrischer Kontaktierung auf, welche über Anschlusselemente elektrisch kontaktiert sind. Zur Erfassung einer der Innentemperatur der Speicherzellen entsprechenden Temperatur ist ein jeweiliger Temperatursensor der Temperatursensoreinheit auf einem Anschlussterminal zumindest einer der Speicherzellen des Energiespeichers angeordnet.

Gemäß der Erfindung ist der Temperatursensor direkt auf einem mit dem Anschlussterminal elektrisch und Wärme leitend verbundenen Anschlusselement derart außerhalb eines Verbindungsbereichs von Anschlussterminal und Anschlusselement angeordnet, dass der Temperatursensor von einem durch das Anschlusselement fließenden Strom unbeeinflusst oder nur gering beeinflusst ist.

Die Erfindung geht von der Erkenntnis aus, dass die Anschlussterminals diejenigen Bereiche einer Speicherzelle darstellen, welche aufgrund ihrer elektrischen Verbindung mit den im Inneren der Speicherzelle angeordneten Elektroden und Elektrolyten auch wärmetechnisch mit diesen Temperatur-sensiblen Komponenten am Besten verbunden sind. Hierdurch kann sichergestellt werden, dass durch die Temperatursensoreinheit eine der Innentemperatur der Speicherzellen entsprechende Temperatur erfasst werden kann. Eine das Temperatursignal der Temperatursensoreinheit auswertende Regelung kann dann mit im Vergleich zum Stand der Technik größerer Genauigkeit arbeiten. Ein Grund hierfür ist, dass das von der Temperatursensoreinheit erfasste Temperatursignal die Dynamik des Temperaturverlaufs im Inneren der Speicherzellen besser wiedergibt.

Bei dem Energiespeicher ist der Temperatursensor der Temperatursensoreinheit auf einem dem Anschlusselement angeordnet, und zwar außerhalb eines Verbindungsbereichs von Anschlussterminal und Anschlusselement, so dass der Temperatursensor von einem durch das Anschlusselement fließenden Strom unbeeinflusst oder nur gering beeinflusst ist. Diese Anordnung im sog. "Stromschatten" sorgt dafür, dass die Nachbildung der im Inneren der Speicherzellen herrschenden Temperatur verbessert ist. Insbesondere wird das Temperatursignal nicht durch kurzzeitig fließende hohe Ströme beeinflusst, was zu einem unruhigen Regelverhalten führen würde. Zudem erlaubt diese Variante eine erleichterte Herstellung des Energiespeichers, da eine großflächige elektrische Verbindung zwischen Anschlussterminal und Anschlusselement hergestellt werden kann.

Vorzugsweise ist der Temperatursensor der Temperatursensoreinheit auf demjenigen Anschlussterminal einer Speicherzelle angeordnet, welcher eine elektrische Verbindung mit einem Gehäuse der betreffenden Speicherzelle aufweist. Die elektrische und damit thermische Anbindung des Anschlussterminals an das Gehäuse der betreffenden Speicherzelle führt zu einer Dämpfung der Anschlusstemperatur, die ohne Anbindung an das Gehäuse (gegenüberliegender Anschluss) durch hohe Strompulse im Vergleich zur Zellinnentemperatur erhöhte Temperatursprünge aufzeigt. Genau diese Dämpfungseigenschaften sorgen nach Ergebnissen durchgeführter Tests dafür, dass für eine Regelung ein Temperaturwert zur Verfügung steht, der eine dem Zellinneren analoge Dynamik des Temperaturverlaufs aufweist.

Es wird angemerkt, dass auch an einem Anschlussterminal, das nicht elektrisch mit dem Gehäuse verbunden ist, eine zum Zellinneren repräsentative Temperatur gemessen werden kann. Zwar wird damit die Dynamik des Systems schlechter erfasst, dies lässt sich jedoch einfach mit einer entsprechenden Auswertesoftware berücksichtigen.

Zweckmäßigerweise weist das Anschlusselement eine Fahne auf, welche außerhalb des Verbindungsbereichs von Anschlussterminal und Anschlusselement ausgebildet ist, auf der der Temperatursensor angeordnet ist. Das Vorsehen des Temperatursensors auf der Fahne des Anschlusselements erlaubt es weiterhin, den Temperatursensor raumoptimiert anzubringen. Insbesondere ist es nicht erforderlich, dass die Fahne und das Anschlusselement in einer gemeinsamen Ebene des Anschlusselements liegen. Vielmehr kann die Fahne in einem Winkel relativ zu der Ebene des Anschlusselements ausgerichtet sein, wodurch seitlich der elektrischen Kontaktierung von Anschlussterminal und Anschlusselement ein geringerer Platz benötigt wird.

In einer weiteren vorteilhaften Ausgestaltung ist das Anschlusselement entweder ein Zellverbinder, der die Anschlussterminals zweier Speicherzellen elektrisch miteinander verbindet, oder ein Modulverbinder, über den der Energiespeicher, insbesondere über eine Steckverbindung, elektrisch kontaktierbar ist. Durch einen Zellverbinder werden somit Speicherzellen elektrisch oder parallel innerhalb des Energiespeichers miteinander verbunden. Die Modulverbinder dienen dazu, den Energiespeicher von extern zu kontaktieren.

Es ist weiterhin zweckmäßig, wenn die Temperatursensoreinheit zumindest zwei Temperatursensoren umfasst, welche die Temperaturen an unterschiedlichen Speicherzellen erfassen, wobei die Temperatursignale der zumindest zwei Temperatursensoren einer Logik zur Auswertung zuführbar sind. Das Vorsehen mehrerer Temperatursensoren in der Temperatursensoreinheit ermöglicht es beispielsweise, etwaige Fehler in der elektrischen Verschaltung des Energiespeichers aufzufinden. Insbesondere ist es möglich, Fehler durch einen Vergleich jeweiliger Temperatursignale aufzufinden. Die Erfassung mehrerer Temperatursignale an mehreren Stellen innerhalb des Energiespeichers ermöglicht es weiterhin, eine präzisere Regelung von Heizvorrichtung bzw. Kühlvorrichtung vorzunehmen.

In einer weiteren zweckmäßigen Ausgestaltung ist ein erster Temperatursensor mit einem Anschlussterminal einer Speicherzelle thermisch gekoppelt, welches Anschlussterminal mit einem als Modulverbinder ausgebildeten Anschlusselement elektrisch verbunden ist, und ein zweiter Temperatursensor mit einem Anschlussterminal einer Speicherzelle thermisch gekoppelt ist, deren beide Anschlussterminals jeweils mit einem als Zellverbinder ausgebildeten Anschlusselement elektrisch verbunden sind. Hierdurch ist es möglich, Fehler in der elektrischen Verschaltung bei der elektrischen Kontaktierung des Energiespeichers festzustellen. Dies ist insbesondere deshalb von Bedeutung, da die Modulverbinder des Energiespeichers häufig mit lösbaren oder steckbaren Verbindungen verbunden werden. Eine schlechte elektrische Verbindung führt zu einem erhöhten Kontaktwiderstand, welcher sich in einer erhöhten Temperatur bemerkbar macht. Diese erhöhte Temperatur wird durch den zweiten Temperatursensor erfasst. Bereits das Vorhandensein einer Abweichung der Temperatursignale vom ersten und zweiten Sensor kann durch eine Logik als Hinweis auf das Vorliegen eines Fehlers ausgewertet werden.

Die Erfindung wird nachfolgend näher anhand von Ausführungsbeispielen in der Zeichnung erläutert. Es zeigen:
- Fig. 1: eine schematische Seitenansicht eines Energiespeichers,
- Fig. 2: eine schematische und perspektivische Schnittdarstellung eines Teils einer Speicherzelle des Energiespeichers aus Fig. 1,
- Fig. 3: eine geschnittene Seitenansicht einer mit einem Temperatursensor versehenen Speicherzelle gemäß Fig. 2,
- Fig. 4: eine teilweise Draufsicht auf eine Vorrichtung gemäß einer ersten Ausgestaltungsvariante,
- Fig. 5a, 5b: eine teilweise Draufsicht und eine Seitenansicht einer Vorrichtung gemäß einer zweiten Ausgestaltungsvariante.
- Fig. 6a, 6b: eine teilweise Draufsicht und eine Seitenansicht einer Vorrichtung gemäß einer dritten Ausgestaltungsvariante,
- Fig. 7a, 7b: eine teilweise Draufsicht und eine Seitenansicht einer erfindungsgemäßen Vorrichtung gemäß einer vierten Ausgestaltungsvariante, und
- Fig. 8: eine Draufsicht auf eine Vorrichtung gemäß einer fünften Ausgestaltungsvariante.

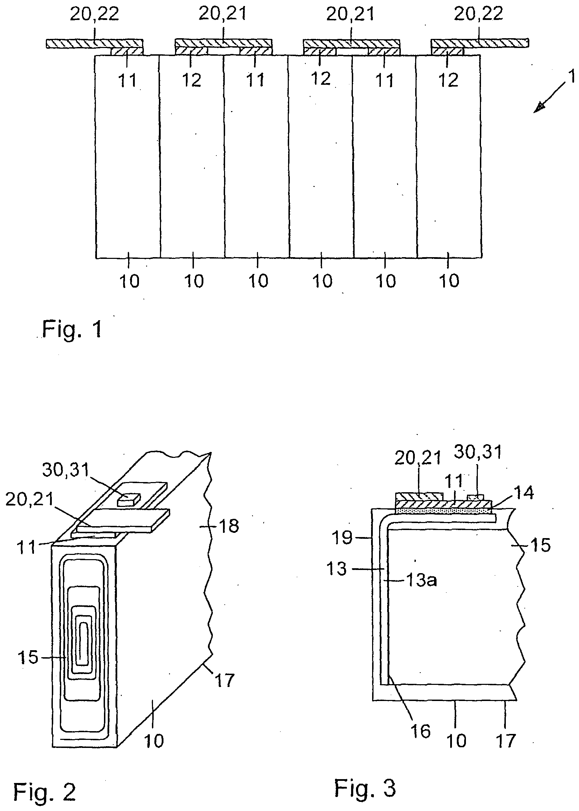

Fig. 1 zeigt in einer Seitenansicht eine schematische Darstellung eines elektrochemischen Energiespeichers 1, wie dieser beispielsweise in batteriebetriebenen Kraftfahrzeugen zum Einsatz kommt. Der Energiespeicher 1 umfasst im Ausführungsbeispiel sechs hintereinander angeordnete, prismatische Speicherzellen 10. Prinzipiell könnte der elektro-chemische Energiespeicher auch aus einer Vielzahl an zylindrischen Speicherzellen gebildet sein.

Jede der Speicherzellen 10 weist zwei Anschlussterminals 11 und 12 auf. Das erste Anschlussterminal 11 stellt beispielsweise den Plus-Pol, das zweite Anschlussterminal 12 den Minus-Pol der Speicherzelle dar, Üblicherweise ist der Plus-Pol elektrisch mit dem Gehäuse der Speicherzelle verbunden. In der Seitenansicht der Fig. 1 ist jeweils nur eines der beiden Anschlussterminals 11, 12 zu erkennen. In dem in Fig. 1 gezeigten Ausführungsbeispiel sind die Speicherzellen 10 derart hintereinander angeordnet, dass benachbart zu einem ersten Anschlussterminal 11 einer Speicherzelle 10 das zweite Anschlussterminal 12 der benachbarten Speicherzelle 10 zum Liegen kommt. Dadurch, dass jeweils zwei benachbart zueinander angeordnete Anschlussterminals 11, 12 nebeneinander angeordnet sind, kann unter Verwendung von Anschlusselementen 20 eine serielle Verschaltung der Speicherzellen erfolgen. Es ist auch möglich , dass zwei benachbart zueinander angeordnete gleiche Anschlussterminals 11,11 bzw. 12, 12 nebeneinander angeordnet sind, um die benachbarten Zellen parallel zu verschalten. Damit können vom elektrischen Energiespeicher höhere Ströme bereitgestellt werden.

Die mit dem Bezugszeichen 21 gekennzeichneten Anschlusselemente 20 stellen Zellverbinder dar und verbinden jeweils zwei nebeneinander liegende Anschlussterminals 11, 12 benachbarter Speicherzellen. Die mit dem Bezugszeichen 22 gekennzeichneten Anschlusselemente stellen Modulverbinder dar, über welche die Gesamtschaltung an Speicherzellen 10 von extern kontaktiert werden kann. Die externe Kontaktierung erfolgt häufig über eine Steckverbindung oder eine sonstige, lösbare Verbindung.

Üblicherweise ist die Gesamtheit an Speicherzellen 10 in einem Gehäuse angeordnet, das der Einfachheit halber in Fig. 1 nicht dargestellt ist. Ebenfalls nicht dargestellt ist eine Kühl- und Heizvorrichtung, welche in das Gehäuse integriert ist, um die Speicherzellen beim Betrieb des Energiespeichers 1 in einem vorgeschriebenen Temperaturbereich zu halten.

Speicherzellen 10 eines Energiespeichers 1 für die Verwendung in einem Kraftfahrzeug basieren derzeit üblicherweise auf der Lithium-Ionen-Technologie. Derartige Speicherzellen sind in einem Temperaturbereich von +5 °C bis +40 °C zu betreiben. Temperaturen oberhalb von +40 °C können zu einer reduzierten Lebensdauer der Zellen führen. Ein Betrieb bei Temperaturen unterhalb von +5 °C führt zu einer verminderten Leistungsfähigkeit und einer geringeren Effizienz der jeweiligen Speicherzelle im Betrieb. Diese Problematik gilt - mit eventuell anderen Temperaturgrenzen - auch für andere Typen von Speicherzellen.

Wenn in der vorliegenden Beschreibung von einem vorgeschriebenen Temperaturbereich der Speicherzellen 10 die Rede ist, so ist hierunter die Temperatur im Inneren, d.h. dort, wo die elektro-chemischen Vorgänge im Inneren der Speicherzelle stattfinden, zu verstehen. Je präziser die Messung der tatsächlichen Temperatur im Inneren einer jeweiligen Speicherzelle 10 erfolgt, desto präziser kann die Kühlung bzw. Heizung der Speicherzel-. len 10 des Energiespeichers 1 erfolgen.

Die erfindungsgemäß vorgesehene Anordnung zumindest eines Temperatursensors 31, 32 einer Temperatursensoreinheit 30 und die sich daraus ergebenden Vorteile lassen sich am Besten in Kenntnis des Aufbaus typischer Speicherzellen verstehen. Nachfolgend wird hierbei insbesondere auf Lithium-Ionen-Speicherzellen mit prismatischem Gehäuse Bezug genommen, wobei das beschriebene Prinzip sich auch auf andere Typen von Speicherzellen übertragen lässt.

Fig. 2 zeigt eine perspektivische Darstellung einer einzelnen Speicherzelle 10 in einer schematischen Darstellung. Fig. 3 zeigt in einer ebenfalls schematischen Darstellung die Speicherzelle von Fig. 2 in einer seitlichen, geschnittenen Ansicht. Im Inneren eines Gehäuses 17 der Speicherzelle 10 ist ein sog. Zellwickel 15 angeordnet. Der Zellwickel besteht aus einem Stapel der Kathoden- und Anodenschichten, jeweils getrennt voneinander durch eine Separatorschicht. Er ist durch Wickeln des Elektrodenstapels und anschließendes Verformen (Ausüben von Druck auf zwei gegenüberliegende Seiten) erzeugt, so dass der Zellwickel in etwa die Gestalt des Gehäuses 17 der Speicherzelle 10 annimmt. Nach dem Einbringen des Zellwickels 15 in das Gehäuse 17 wird Elektrolyt in das Gehäuse 17 eingefüllt. Um zu verhindern, dass ein Kurzschluss zwischen den einzelnen Wicklungsschichten entsteht, sind diese durch eine jeweilige Isolationslage (sog. Separator) voneinander elektrisch isoliert. Die elektrische Isolation führt auch immer zu einer niedringen thermischen Wärmeleitfähigkeit senkrecht durch die Schichten des Elektrodenstapels. Daher enstehen hohe thermische Widerstände und damit Temperaturdifferenzen zwischen dem inneren des Zellwickels 15 und der Gehäuseseitenwand 18, so dass an der Seitenwand 18 keine reale Temperatur des Inneren der Speicherzelle 10 messbar ist. Demgegenüber ist mangels einer Isolationsschicht eine solche thermische Isolation an der Stirnseite 19 der Speicherzelle 10 nicht gegeben.

An der Stirnseite des Zellwickels 15 ist ein sog. Stromsammler 13 angeschweißt. Der Stromsammler 13 weist eine L-förmige Gestalt auf. Mit seinem vertikalen Schenkel 13a ist dieser elektrisch durch eine Schweißung/Lötung mit dem Elektrodenlaminat des Zellwickels 15 elektrisch verbunden. Der waagerecht verlaufende Schenkel 13b des Stromsammlers ist über eine Schweiß- und/oder Nietverbindung 14 mit dem darüberliegenden Anschlussterminal elektrisch verbunden. Im Ausführungsbeispiel ist das erste Anschlussterminal 11 mit dem Zellwickel 15 elektrisch verbunden. Auf der von der Speicherzelle 10 abgewandten Seite des ersten Anschlussterminals 11 ist das Anschlusselement 12 elektrisch leitend (beispielsweise durch eine Schweißung oder Lötung) aufgebracht. Das Anschlusselement 20 ist hier ein Zellverbinder 21, der eine elektrische Verbindung zu einem zweiten Anschlussterminal 12 einer benachbarten, in den Figuren 2 und 3 nicht dargestellten Speicherzelle 10 herstellt. Darüber hinaus ist ein Temperatursensor 31 der Temperatursensoreinheit 30 direkt auf das erste Anschlussterminal 11 aufgebracht.

Dadurch, dass das erste Anschlussterminal 11 über die Verbindung 14 und den Stromsammler 13 unmittelbar an den Zellwickel 15 thermisch angebunden ist, liefert der Temperatursensor 31 ein der Innentemperatur der Speicherzellen entsprechendes Temperatursignal. Die Innentemperatur der Speicherzellen ist hier als diejenige Temperatur zu verstehen, welche an den Orten der elektro-chemischen Vorgänge der Speicherzelle 10 abläuft.

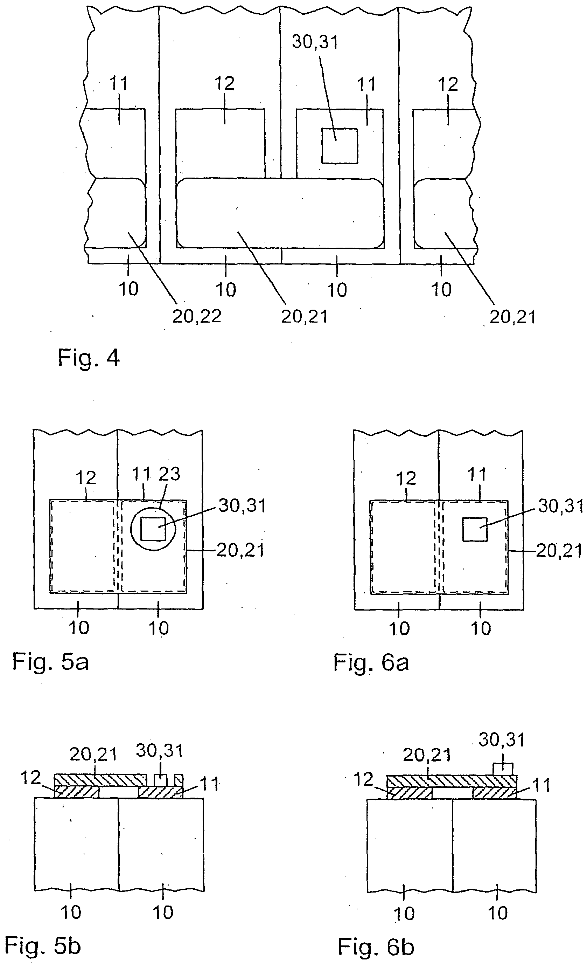

Die Figuren 4 bis 7.zeigen unterschiedliche Ausführungsbeispiele, an welchen Stellen der Temperatursensor 31 der Temperatursensoreinheit 30 auf einem Anschlussterminal 11, 12 einer Speicherzelle 10 des Energiespeichers 1 angeordnet werden kann.

In den Ausführungsbeispielen gemäß den Figuren 4 und 5a, 5b ist der Temperatursensor 31 der Temperatursensorseinheit direkt auf einem ersten Anschlussterminal 11 einer Speicherzelle 10 des Energiespeichers 1 angeordnet. Im ersten Ausführungsbeispiel gemäß Fig. 4 ist der Zellverbinder 21 derart ausgebildet, dass dieser die Anschlussterminals 11, 12 nicht vollflächig, sondern lediglich beispielhaft nur zur Hälfte kontaktiert. In der verbleibenden Hälfte des ersten Anschlussterminals 11 ist der Temperatursensor 31 der Temperatursensoreinheit 30 angeordnet.

Demgegenüber ist im zweiten Ausführungsbeispiel gemäß den Figuren 5a, 5b der Temperatursensor 31 in einem Sackloch 23 des Zellverbinders 21 angeordnet, wobei der Zellverbinder 21 jeweils vollflächig mit den Anschlussterminals 11, 12 verbunden ist. Aus der Querschnittsdarstellung der Fig. 5b geht dabei gut hervor, wie der Temperatursensor 31 im Inneren des Sacklochs 23 auf dem Anschlussterminal 11 angeordnet ist. Durch die Anordnung im Inneren des Sacklochs 23 ist der Temperatursensor 31 vor mechanischer Beschädigung geschützt.

Der Vorteil dieser Ausgestaltungsvarianten der direkten Aufbringung des Temperatursensors auf einem Anschlussterminal einer Speicherzelle besteht darin, dass der Wärmeleitungspfad vom Inneren der betreffenden Speicherzelle 10 bis zum dem Temperatursensor 31 auf dem Anschlusselement 11 den geringsten Wärmewiderstand überwinden muss. Im Ergebnis kann hierdurch ein Temperaturwert erfasst werden, der am Besten der Innentemperatur der Speicherzelle entspricht.

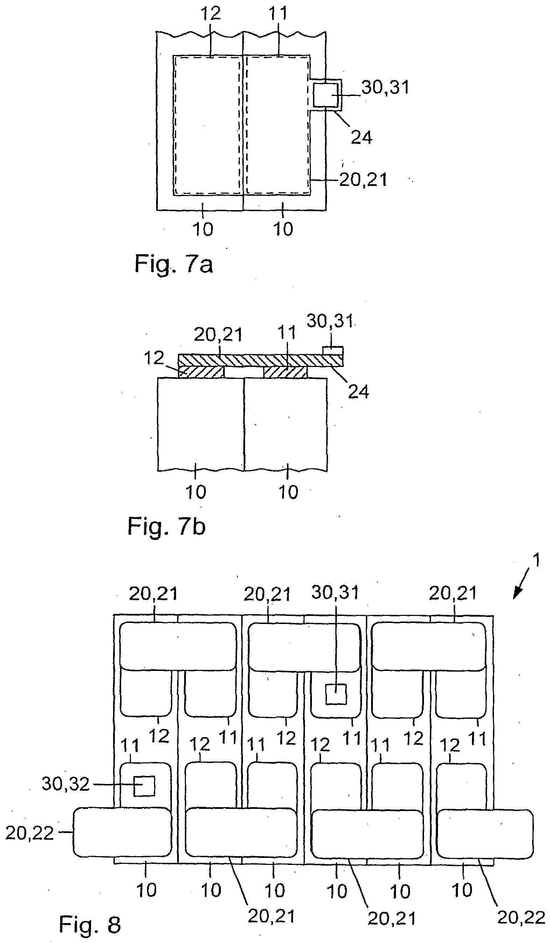

In den Ausführungsbeispielen gemäß den Figuren 6 und 7 ist eine alternative Anordnung des Temperatursensors 31 dargestellt. Der Temperatursensor 31 ist jeweils auf dem Zellverbinder 21 angeordnet, welches elektrisch und Wärme leitend mit den Anschlussterminals 11, 12 zweier benachbarter Speicherzellen 10 verbunden ist.

Im dritten Ausführungsbeispiel gemäß den Fig. 6a und 6b ist der Temperatursensor 31 auf dem Zellverbinder 21 unmittelbar oberhalb des Anschlussterminals 11 angeordnet. Im Gegensatz dazu ist in dem vierten Ausführungsbeispiel, das in den Figuren 7a und 7b gezeigt ist, der Temperatursensor 31 auf einer Fahne 24 des Zellverbinders 21 derart angeordnet, dass der Temperatursensor 31 außerhalb der Verbindungsfläche zwischen Zellverbinder 21 und erstem Anschlussterminal 11 zum Liegen kommt. Wie aus der Seitendarstellung der Fig. 7b ersichtlich ist, liegen die Fahne 24 und der Zellverbinder 21 in einer gemeinsamen Ebene. Sofern dies aus Platzgründen zweckmäßig ist, könnte die Fahne 24 gegenüber dem Zellverbinder 21 auch in einem Winkel angeordnet sein und beispielsweise gegenüber der Oberseite der Speicherzellen 10 nach oben stehen. Der Vorteil der in den Figuren 6 und 7 gezeigten Anordnung besteht darin, dass die Zellverbinder 21 und die Anschlussterminals 11, 12 vollflächig miteinander verbunden werden können, so dass sich im Vergleich zu der ersten Variante gemäß den Figuren 4 und 5 im Bereich der Verbindung eine geringere Stromdichte ergibt. Dadurch, dass der Temperatursensor 31 auf der Fahne 24 des Zellverbinders 21 angeordnet ist, liegt dieser im sog. "Stromschatten", so dass der von dem Temperatursensor 31 erfasste Temperaturwert nicht oder nur gering durch den über den Zellverbinder 21 fließenden Strom und der dadurch entstehenden ohmschen Verlustleistung beeinflusst wird.

In den in den Figuren 4 bis 7 dargestellten Ausführungsbeispielen ist der Temperatursensor 31 im Zusammenspiel mit einem Zellverbinder 21 gezeigt. Prinzipiell könnte der Temperatursensor 31 auch - entweder direkt oder mittelbar über ein Anschlusselement 20-auf einem solchen Anschlussterminal angeordnet sein, welches mit einem Modulverbinder 22 elektrisch verbunden ist.

Fig. 8 zeigt eine Draufsicht auf ein weiteres Ausführungsbeispiel der erfindungsgemäßen Vorrichtung. Dabei sind die in Fig. 1 beispielhaft sechs hintereinander angeordnete Speicherzellen 10 in einer Draufsicht dargestellt. Die Speicherzellen 10 sind über ihre jeweiligen Anschlusselemente 11, 12 über Zellverbinder 21 und Modulverbinder 22 in bekannter Weise seriell miteinander verschaltet. Die Temperatursensoreinheit 30 umfasst in diesem Ausführungsbeispiel zwei Temperatursensoren 31, 32. Der Temperatursensor 31 ist auf einem solchen Anschlussterminal 11 angeordnet, das mit einem Zellverbinder 21 elektrisch gekoppelt ist. Demgegenüber ist der Temperatursensor 32 mit dem Anschlussterminal 11 einer Speicherzelle 10 verbunden, welche mit einem Modulverbinder 22 elektrisch zur externen Kontaktierung des Energiespeichers 1 verbunden ist. Durch den Temperatursensor 32 wird eine Temperatur erfasst, die nicht nur von der Innentemperatur der betreffenden Speicherzelle, sondern auch von der Temperatur der Steckverbindung abhängig ist. Im Falle einer fehlerhaften Steckverbindung des Modulverbinders 22 erfasst der Temperatursensor 32 somit eine erhöhte Temperatur gegenüber dem Temperatursensor 31, welcher lediglich die Innentemperatur der betreffenden Speicherzelle 10 erfasst. Werden weitere Temperatursignale der Temperatursensoren 31, 32 einer Logik zur weiteren Auswertung zugeführt, so kann diese bei stark voneinander abweichenden Temperaturen auf einen Fehler in der Kontaktierung des Energiespeichers über den Modulverbinder 22 schließen. Ist die elektrische Verbindung zu dem Modulverbinder 22 hingegen fehlerfrei, so sollten die Temperatursensoren 31, 32 annähernd gleiche Temperatursignale liefern.

Die Logik, welcher das oder die Temperatursignale der Temperatursensoren 31, 32 zugeführt werden, kann beispielsweise auf einer Leiterplatte angeordnet sein, welche oberhalb oder seitlich der Speicherzellen 10 des Energiespeichers 1 angeordnet ist.

In einer weiteren, nicht dargestellten Ausgestaltungsvariante könnte eine weiter verbesserte Genauigkeit bei der Überwachung und Regelung der Speicherzellen des Energiespeichers dadurch erreicht werden, dass nicht nur einzelne oder manche der Speirherzellen 10 mit einem Temperatursensor versehen werden, sondern an sämtlichen der Speicherzellen 10 ein Temperatursensor in der beschriebenen Weise angeordnet wird.

Grundsätzlich ist es auch möglich, dass verschiedene der in den Figuren 4 bis 7 beschriebenen Varianten in einem Energiespeicher 1 verwirklicht werden.

Das erfindungsgemäße Vorgehen ermöglicht eine exaktere Temperierung der Speicherzellen zur Optimierung deren Lebensdauer. Es ist möglich, sicherheitskritische Temperaturen von Speicherzellen, elektrischen Zellverbindern und elektrischen Modulverbindern des Energiespeichers zu erfassen. Basierend auf der präziseren Temperaturerfassung kann eine effizientere Temperaturregelung erfolgen.

### Bezugszeichenliste

- 1: Energiespeicher
- 10: Speicherzelle
- 11: erstes Anschlussterminal
- 12: zweites Anschlussterminal
- 13: Kontaktbügel
- 14: Verbindung zwischen Kontaktbügel und Anschlussterminal (Schweiß- und/oder Nietverbindung)
- 15: Zellwickel
- 16: Verbindung zwischen Kontaktbügel und Zellwickel (Stromsammler)
- 17: Gehäuse
- 18: Seitenwand
- 19: Stirnseite
- 20: Anschlusselement
- 21: Zellverbinder
- 22: Modulverbinder
- 23: Sackloch
- 24: Fahne des Anschlusselements
- 30: Temperatursensoreinheit
- 31: Temperatursensor
- 32: Temperatursensor

## Patentansprüche

1. Elektrochemischer Energiespeicher mit einer Vorrichtung zum Erfassen der Temperatur des Energiespeichers (1), insbesondere für den Einsatz in einem Kraftfahrzeug, wobei die Vorrichtung eine Temperatursensoreinheit (30) aufweist, wobei der Energiespeicher (1) eine oder mehrere Speicherzellen (10) mit jeweils zwei Anschlussterminals (11, 12) zu deren elektrischer Kontaktierung umfasst, welche über Anschlusselemente (20) elektrisch kontaktiert sind, wobei zur Erfassung einer der Innentemperatur der Speicherzellen (10) entsprechenden Temperatur ein jeweiliger Temperatursensor (31, 32) der Temperatursensoreinheit (30) auf einem Anschlussterminal (11, 12) zumindest einer der Speicherzellen (10) des Energiespeichers (1) angeordnet ist,
**dadurch gekennzeichnet, dass**
der Temperatursensor (31) direkt auf einem mit dem Anschlussterminal (11, 12) elektrisch und Wärme leitend verbundenen Anschlusselement (20) derart außerhalb eines Verbindungsbereichs von Anschlussterminal (11, 12) und Anschlusselement (20) angeordnet ist, dass der Temperatursensor (31) von einem durch das Anschlusselement (20) fließenden Strom unbeeinflusst oder nur gering beeinflusst ist.

2. Elektrochemischer Energiespeicher nach Anspruch 1, **dadurch gekennzeichnet, dass** das Anschlusselement (20) eine Fahne (24) aufweist, welche außerhalb des Verbindungsbereichs von Anschlussterminal (11, 12) und Anschlusselement (20) ausgebildet ist, auf der der Temperatursensor (31) angeordnet ist.

3. Elektrochemischer Energiespeicher nach Anspruch 1, **dadurch gekennzeichnet, dass** der Temperatursensor (31) der Temperatursensoreinheit (30) auf demjenigen Anschlussterminal (11) einer Speicherzelle (10) angeordnet ist, welcher eine elektrische Verbindung mit einem Gehäuse (17) der betreffenden Speicherzelle (10) aufweist.

4. Elektrochemischer Energiespeicher nach einem der vorhergehenden Ansprüche, **dadurch gekennzeichnet, dass** das Anschlusselement (20) entweder ein Zellverbinder (21) ist, der die Anschlussterminals (11, 12) zweier Speicherzellen (10) elektrisch miteinander verbindet, oder ein Modulverbinder (22), über den der Energiespeicher (1), insbesondere über eine Steckverbindung, elektrisch kontaktierbar ist.

5. Elektrochemischer Energiespeicher nach einem der vorhergehenden Ansprüche, **dadurch gekennzeichnet, dass** die Temperatursensoreinheit (30) zumindest zwei Temperatursensoren (31, 32) umfasst, welche die Temperaturen an unterschiedlichen Speicherzellen (10) erfassen, wobei die Temperatursignale der zumindest zwei Temperatursensoren (31,32) einer Logik zur Auswertung zuführbar sind.

6. Elektrochemischer Energiespeicher nach Anspruch 4 und 5, **dadurch gekennzeichnet, dass** ein erster Temperatursensor (31) mit einem Anschlussterminal (11) einer Speicherzelle (10) thermisch gekoppelt ist, welches Anschlussterminal (11) mit einem als Modulverbinder (22) ausgebildeten Anschlusselement (20) elektrisch verbunden ist und ein zweiter Temperatursensor (32) mit einem Anschlussterminal (11) einer Speicherzelle (10) thermisch gekoppelt ist, deren beide Anschlussterminals (11, 12) jeweils mit einem als Zellverbinder (21) ausgebildeten Anschlusselement (20) elektrisch verbunden sind.

## Claims

1. An electrochemical energy store having a device for detecting the temperature of the energy store (1), especially for use in a motor vehicle, wherein the device has a temperature sensor unit (30), wherein the energy store (1) comprises one or more storage cells (10) each with two connection terminals (11, 12) for the electrical contacting thereof, which connection terminals are contacted electrically by connection elements (20), wherein to detect a temperature which corresponds to the internal temperature of the storage cells (10), a respective temperature sensor (31, 32) of the temperature sensor unit (30) is arranged on a connection terminal (11, 12) of at least one of the storage cells (10) of the energy store (1),
**characterised in that** the
temperature sensor (31) is directly arranged on a connection element (20) which is connected to the connection terminal (11, 12) in an electrically and thermally conductive manner, outside a connection region of connection terminal (11, 12) and connection element (20), such that the temperature sensor (31) is not influenced or is only slightly influenced by a current flowing through the connection element (20).

2. An electrochemical energy store according to claim 1, **characterised in that** the connection element (20) has a lug (24) which is formed outside the connection region of connection terminal (11, 12) and connection element (20) and on which the temperature sensor (31) is arranged.

3. An electrochemical energy store according to claim 1, **characterised in that** the temperature sensor (31) of the temperature sensor unit (30) is arranged on the connection terminal (11) of a storage cell (10), which connection terminal has an electrical connection with a housing (17) of the relevant storage cell (10).

4. An electrochemical energy store according to any one of the preceding claims, **characterised in that** the connection element (20) is either a cell connector (21) which electrically interconnects the connection terminals (11, 12) of two storage cells (10), or is a module connector (22), via which the energy store (1) can be electrically contacted, especially via a plug-in connection.

5. An electrochemical energy store according to any one of the preceding claims, **characterised in that** the temperature sensor unit (30) comprises at least two temperature sensors (31, 32) which detect the temperatures at different storage cells (10), wherein the temperature signals of the at least two temperature sensors (31, 32) can be delivered to a computer for evaluation.

6. An electrochemical energy store according to claim 4 and claim 5, **characterised in that** a first temperature sensor (31) is thermally coupled to a connection terminal (11) of a storage cell (10), which connection terminal (11) is electrically connected to a connection terminal (20) configured as a module connector (22), and a second temperature sensor (32) is thermally coupled to a connection terminal (11) of a storage cell (10), both connection terminals (11, 12) of which are electrically connected in each case to a connection terminal (20) configured as a cell connector (21).

## Revendications

1. Accumulateur d'énergie électrochimique comprenant un dispositif permettant de détecter la température de cet accumulateur d'énergie (1), en particulier destiné à être monté dans un véhicule, ce dispositif comprenant une unité de capteurs de température (30), l'accumulateur d'énergie (1) comprenant une ou plusieurs cellule(s) d'accumulation (10) ayant chacune deux bornes de connexion (11, 12) pour permettre leur mise en contact électrique qui peuvent être mises en contact électrique par l'intermédiaire d'éléments de connexion (20), pour déterminer une température correspondant à la température interne des cellules d'accumulation (10), chaque capteur de température (31, 32) de l'unité de capteurs de température (30) étant monté sur une borne de connexion (11, 12) d'au moins l'une des cellules d'accumulation (10) de l'accumulateur d'énergie (1),
**caractérisé en ce que**
le capteur de température (31) est monté directement sur un élément de connexion (20) relié de façon électriquement et thermiquement conductrice avec la borne de liaison (11, 12) à l'extérieur d'une zone de liaison de la borne de connexion (11, 12) et de l'élément de connexion (20) de sorte que le capteur de température (31) ne soit pas ou uniquement peut influencé par le courant passant au travers de l'élément de connexion (20).

2. Accumulateur d'énergie électrochimique conforme à la revendication 1,
**caractérisé en ce que**
l'élément de connexion (20) comprend un talon (24) qui est formé à l'extérieur de la zone de liaison de la borne de connexion (11, 12) et de l'élément de connexion (20) sur lequel est monté le capteur de température (31).

3. Accumulateur d'énergie électrochimique conforme à la revendication 1,
**caractérisé en ce que**
le capteur de température (31) de l'unité de capteurs de température (30) est monté sur la borne de connexion (11) d'une cellule d'accumulation (10) qui est en liaison électrique avec un boîtier (17) de la cellule d'accumulation (10) concernée.

4. Accumulateur d'énergie électrochimique conforme à l'une des revendications précédentes,
**caractérisé en ce que**
l'élément de connexion (20) est soit un élément de liaison de cellules (21) qui relie électriquement entre elles les bornes de connexion (11, 12) de deux cellules d'accumulation (10), soit un élément de liaison de modules (22) par l'intermédiaire duquel l'accumulateur d'énergie (1) peut être mis en contact électrique, en particulier par une liaison à fiches.

5. Accumulateur d'énergie électrochimique conforme à l'une des revendications précédentes,
**caractérisé en ce que**
l'unité de capteurs de température (30) comprend au moins deux capteurs de température (31, 32) qui détectent les températures au niveau de cellules d'accumulation (10) différentes, les signaux de température des deux capteurs de température (31, 32) pouvant être transmis à une logique d'exploitation.

6. Accumulateur d'énergie électrochimique conforme à l'une des revendications 4 et 5,
**caractérisé en ce qu'**
un premier capteur de température (31) est couplé thermiquement avec une borne de connexion (11) d'une cellule d'accumulation (10) cette borne de connexion (11) étant reliée électriquement à un élément de connexion (20) réalisé sous la forme d'un élément de liaison de modules (22), et un second capteur de température (32) est couplé thermiquement avec une borne de connexion (11) d'une cellule d'accumulation (10) dont les deux bornes de connexion (11, 12) sont respectivement reliées électriquement avec un élément de connexion (20) réalisé sous la forme d'un élément de liaison de cellules (21).
